Europäisches Patentamt

European Patent Office

Office européen des brevets

(11) Publication number: **0 152 490**
A1

# EUROPEAN PATENT APPLICATION

(21) Application number: 83306809.1

(22) Date of filing: 08.11.83

(51) Int. Cl.⁴: **C 04 B 16/06**, C 04 B 32/02

(43) Date of publication of application: 28.08.85
Bulletin 85/35

(84) Designated Contracting States: **DE FR GB IT**

(71) Applicant: **Restrepo, Jose Manuel, Calle 85 No.14-70, Bogota (CO)**

(72) Inventor: **Restrepo, Jose Manuel, Calle 85 No.14-70, Bogota (CO)**

(74) Representative: **Jack, Bruce James et al, FORRESTER & BOEHMERT Widenmayerstrasse 4/I, D-8000 Munchen 22 (DE)**

(54) Improved fibre-reinforced cement and process.

(57) A hydraulic cement mortar comprising uniformly dispersed reinforcing fibrillated plastics filaments having a microfibrillated structure, and elements manufactured therefrom with mechanical isotropic properties, said microfibrillated filaments consisting of sections shredded from non-twisted fibrillated ribbons, said fibrillated ribbons having been split apart and subjected to microfibrillation by stirring mortar compounds and said filaments. Also disclosed is a process for manufacturing said elements.

EP 0 152 490 A1

Improved fibre-reinforced cement and process

This invention relates to fibre-reinforced cement.

Heretofore, it has been proposed to use polymeric plastics materials to enhance the general behaviour of cement-based parts, by incorporating such materials into the cement mix by means of varied techniques. According to one approach, for example, liquid polymeric-resin systems have been formulated to be embodied into mortars and concretes, developing thereby in their end products improved tensile strength and compressive strength, as well as characteristics of chemical and abrasion-resistance. Thus, a polymer mortar is prepared by partly replacing cement with polymer in the respective cementitious mix. This process requires the use, on the one hand, of specific liquid polymer systems (resins, accelerators and catalysts) and, on the other, apparatus specially designed for proportioning and blending the appropriate amounts of materials. To that effect, the plastics industry has devised suitable polymer systems comprising resin as their main constituent, where the particular resin has often been selected from polyester and methyl- or polymethyl- methacrylate resins, together with promoters and, frequently, other proprietary additives. As a result, cement-mix processors depend on the use of materials of limited availability. Moreover, another limitation which discourages the widespread use of the polymer resin-cement techniques is brought about by the need to use sophisticated and expensive proportioning and blending machines.

Also, in the always continuing efforts to enhance properties of parts manufactured from cement mixtures, particularly to increase the strength of cement-based building elements subjected to impact loading, the use of plastics filamentary reinforcing means has been proposed. Plastics fibres, however, have proved to be unsuitable in some respects as reinforcing materials. A main drawback is the one arising in great measure from the hydrophobic nature of plastics fibres, which comes to impair their frictional adhesion with the cementitious matrix whereby the stressed plastics filaments become debonded. The problem of the poor physico-chemical adherence of the filaments to the matrix has deterred further the use of the so far commercially available plastics fibres as reinforcing means for cement products. In order to overcome such a hindrance posed to the use of monofilamentary plastics fibres it has been proposed to use certain plastics materials in the form of fibrillated films, as a reinforcing means for cement-based elements. The foregoing approach has permitted indeed the successful attainment of good mechanical bonding of the reinforcing fibrillated films with the cement matrix.

Typical of the techniques for manufacturing cement-based parts reinforced with plastics fibres is that disclosed in GB-A-1,582,945 which teaches the use of fibrillated polypropylene film, either as a structure comprised of spread-out, non-woven elongated fibres forming a film-like mesh, or as a woven-mesh structure. In either case, the film is given an opened-up, continuous structure having its dimensions and shape such as closely to fit the dimensions of the sheet-like, plastics-reinforced article. The plastics-reinforced sheets manufactured by the method of this patent are necessarily layered structures, having the fibres as a single-direction reinforcement, as a direct consequence of their manufacturing process. The sheets have been proposed as suitable substitutes for asbestos-reinforced cement articles. However, certain conditions, particularly high temperature conditions, bring about spallation and delamination of the layered structures.

GB-A-1,586,512 deals with the manufacturing of building sheets wherein the cement is reinforced by means of polypropylene fibres: the cementitious mix is reinforced further with mineral flakes and other fibres; and the fibres are concentrated in layers in the sheets.

According to the technologies based on the use of fibrillated plastics films as the reinforcing means for cement-based parts, the films are coated with cement mortar and the excess mortar removed from the coated films; the so coated films are laid in sequence, each coextensively arranged on to the other, piling up the required number of layers to make up the desired sheet thickness. The so prepared sheet while still in its fresh condition may be handled to be moulded into the shape of the particular mould used, suited to the end product. The articles manufactured in that way, because of prevailing orientation of the fibrils in their reinforcing films in one direction only, have values for mechanical properties greatly differing according to the directions in which they are oriented: that is, the articles are said to be remarkably anisotropic. The anisotropic nature is controlled then, in accordance to the orientation in which the plastics mesh is placed and according to the mesh opening.

As stated above, in accordance with the foregoing process the reinforcing plastics films are mechanically slit into a predetermined degree of fibrillation which will be preserved throughout the manufacturing process and it will be the same amount of fibrillation that will be present in the hardened cement product. Since the fibrillated film is embedded into a previously prepared mortar paste, and inasmuch as the plastics material is chosen from polyolefines, particularly polypropylene, which are hardly wettable materials, the process therefore does not provide for promoting the desirable humidification to develop appropriate adherence between the fibrous material and the matrix encapsulating it. Poor adhesion impairs the tensile strength of the cement mortar elements obtained by this process, as well as the ability to develop closely spaced multicracking with desirable small cracks. The development of thin cracks in a closely arranged pattern is a phenomenon normally occurring in hardened cement elements which have been reinforced by means of aligned polypropylene fibres.

Summarizing, there are prior art processes designed for replacing asbestos fibres with polypropylene fibres as a reinforcing material for cement-based elements, particularly reinforced cement sheets, boards and the like, and the literature abounds in references to such techniques. Even though satisfactory plastics fibres-reinforced cement showing properties bearing comparison with those of asbestos-reinforced cements have been obtained through prior art processes, their use is restrained, first because they lead to a material suitable only for sheet products, in which the reinforcing material is not efficiently used, and the fibre-cement material is suited to be shaped by one definite moulding operation only; and secondly because the end products obtained are remarkably anisotropic in their properties.

An objective of the present invention is the preparation of cement mortar materials comprising reinforcing plastics fibres, wherein the above set forth drawbacks of the prior art are overcome.

Consequently, a main object of this invention is to provide products from plastics fibre-reinforced mortar wherein the effect of mechanical anchoring of the fibre into the cementitious matrix is improved and, thus, more efficient use of the reinforcing material is achieved, whereby the end products are obtained in a less expensive manner.

An additional object of this invention is to provide fibre-cement products possessing substantially identical mechanical properties when measured to any directions thereto; that is, end products that are as isotropic as possible.

Yet another object of the invention is to provide plastics fibre-reinforced products having increased resistance to tensile loads and impact loading after the hardened cementitious matrix has developed minute cracking therein, compared with the respective properties of the same cement matrix free from said reinforcing material.

Thus in one aspect the present invention provides a cement mortar comprising water, particulate mortar components of cement and sand, and separate reinforcing filaments, characterised in that said separate reinforcing filaments are obtained from polyolefin film and have filamentary structure comprising hooked microfibrils laterally branching from points along the length of said separate filaments, and are evenly distributed throughout the body of said cement mortar in a randomly oriented fashion along all of its spatial directions, said microfibrillated filaments consisting in sections shredded from non-twisted fibrillated ribbons having a length of up to 50mm long, with said fibrillated ribbons having been split apart from said polyolefin film and subjected to microfibrillation by stirring particulate mortar components and said reinforcing filaments to effect stretching the fibrillated film fibrils to breakage so generating smaller splinters which are the microfibrils.

The invention further provides a cement mortar characterised by microfibrillated reinforcing filaments obtained from a polyolefin film, wherein said filaments are separate sections of fibre having a length of up to about 50mm, said separate filament sections being provided with curled microfibrils laterally branching out along the length thereof; and wherein said separate filaments are homogeneously dispersed throughout said cement mortar in randomly directed orientations in all of its spatial directions using high speed stirring, and where the filamentary reinforcing material is comprised in an amount between 0.2% and 15% by volume of the total dry volume of non-reinforced mortar.

In another aspect the invention provides an isotropic element manufactured from a cement mortar characterised by about 0.2% - 15% by volume of microfibrillated fibrous reinforcing material over total dry volume comprised of separate filaments evenly distributed throughout the matrix of said element, wherein said filaments are randomly dispersed in all of the spatial directions of said element, with said filaments being separate sections of about 50mm long cut from fibrillated polyolefin film and subjected to a microfibrillation operation, and said separate filaments being provided with laterally extending curled or hooked microfibrils branching from points spaced along the length thereof, whereby said element shows substantially equal mechanical properties when measured in any directions of the body thereof.

The polyolefin may conveniently be polypropylene or polyethylene or a mixture of these polyolefins.

The invention also consists in a process for manufacturing a cement mortar-based, plastics fibre-reinforced element showing mechanical properties which are independent of the direction of its body in which the properties are measured, which method is characterised by embodying into the cement mortar from about 0.20% by volume to about 15% by volume of fibrous reinforcing plastics material comprised of a fibrillated polyofefin; stirring the mortar-fibrous mix to form thereby separate filaments of about 50mm long homogeneously dispersed throughout said mix while at the same time said separate filaments are given a microfibrillated structure having laterally extended curled or hooked microfibrils branching from points spaced along the length thereof; and moulding said mortar-fibrous material mix into any element shape with said reinforcing microfibrillated structures being randomly oriented throughout the hardened matrix.

In an embodiment thereof, the invention further consists in a process for producing cement mortar-based elements having mechanical properties substantially equal in all of the directions of their bodies, which process is characterised by preparing non-twisted, fibrillated ribbons from a polyolefin film material and cutting the fibrillated ribbons into sections of up to about 50mm long; spreading out said fibrillated cut ribbons by air treating the same; feeding said sections of opened-up fibrillated cut ribbon sections into a mixing device provided with high-speed rotary stirring means while at the same time cement, fine aggregate and water are being fed into said mixing device, and stirring the mix for a time enough to bring about by means of the shredding action between said mix particulate materials and said ribbons separate microfibrillated filaments having microfibrillated structure provided with curled or hooked microfibrils branching therealong, with said microfibrillated filaments being homogeneously distributed throughout the mass of said cement mortar mix, and in orientations randomly directed along all of its spatial directions; and moulding said cement mortar containing said microfibrillated filaments, into the shape of said elements.

In accordance with the invention, development of bond or true adherence between plastics fibres and the cement matrix is brought about only by actual mechanical interlocking between branched out end "hooked" fibrils outwardly extended from the separate plastics fibres, and the mortar matrix; so that said fibres are capable of transmitting tension forces between spaced-apart adjacent blocks of the fissured matrix. The spacing between fracturing cracks in the matrix as well as the crack width can be controlled as a result of taking into consideration several fibre features such as, for instance, their shape, length, diameter orientation and their amount incorporated into the cement mass, as well as the degree of fibrillation given thereto.

The fibre present within the matrix, according to this invention, is a branched monofilament fibre derived from an untwisted fibrillated ribbon of fibrillated polyolefin film. In a convenient procedure, the polyolefin film is cut into rather long narrow ribbons or strips of about 15mm wide, and the non-twisted ribbons are fibrillated into fibres by conventional fibrillating means. The so fibrillated ribbons are cut into lengths of up to about 50mm. These sections of fibrillated ribbons are first air treated to spread out their separate fibres and then they are fed into a mortar mixing machine fitted with a high-speed propeller, wherein the mortar components and fibrous material are blended together. The mechanical shredding action which takes place in the mixing operation causes the ribbon fibrils to become further fibrillated or refibrillated and the ribbon fibrils are broken apart into individual filaments having a branched structure provided with microfibrils or fibrets outwardly projecting along their length. The projected microfibrils are somewhat curled in shape, and for their anchorage purposes they perform as anchoring elements or "hooks" within the hardened cement matrix. The cross-sectional area and the length of the filaments - as well as their length in one same direction - differ from one filament to another.

The multiple cracking which has normally been shown to occur in cement-mortar hardened elements gives rise to lengthening of the fibres, in that way bringing stresses to bear along the longitudinal fibres which are directed to pull the fibres out from their condition embedded within the cement matrix. Longitudinal mineral reinforcing fibres and generally the fibres deprived of branched structure are liable to such pull-out failure, and actually fail. In contradistinction, the side branches or "hooks" extended from the microfibrillated fibres according to the present invention, act to resist fibre dislodging from within the matrix.

The invention is further explained with reference to the accompanying drawings, in which:

FIGURE 1 is a plan view of a section of untwisted polyprolypene fibrillated ribbon for use according to the invention;

FIGURE 2 is a plan view of the ribbon of Figure 1 after being subjected to a spreading out step by means of an air stream;

FIGURE 3 illustrates two microfibrillated filaments as they finally appear as reinforcing means for a cement matrix;

FIGURE 4 is a view of such a filament as shown in Figure 3 within a cement matrix; and

FIGURE 5 schematically illustrates a filament cross-sectional area.

The hereinabove stated objectives and advantages of the invention are achieved by providing a composite material comprising an intimate and homogeneous mixture of microfibrillated polyolefin filaments which are oriented in all of the spatial directions and kept evenly distributed throughout the mass of hydraulically setting binder, like Portland cement. Because of both the polydirectional orientation of the fibres in the mass, and their particularly fibrillated structure suitable to achieve a hook-like anchoraging reinforcement, the so reinforced composite material gives rise to elements having identical mechanical properties when measured at any directions thereof, that is, they physically behave as isotropic bodies. Of course, mechanical isotropy is a largely desirable behaviour in elements.

The invention takes into consideration the observation that fibrillated sections cut from polyolefin ribbons, when subjected to the combined effect of a shear mixer and shredding action of the mortar components - basically cement and sand - besides breaking apart into monofilamentary fibres, become microfibrillated branched structures with laterally extending microfibrils or fibrets having varying length and cross-sectional area. Also, the microfibrillated polyolefine fibres are thoroughly wetted in the operation of mixing the mortar components. It should be noted at this point, however, that the true adherence of the plastics micro-fibrillated fibres with the cement matrix does not depend, in the present process, on a physico-chemical phenomenon inasmuch as polyolefin and cement do not show chemical affinity to each other. Nor can the good fibre-to-matrix bonding actually achieved be considered as being merely derived from frictional action, because lateral to longitudinal deformation ratio, or Poisson's ratio, of the polyolefin, is very high, so that substantial contraction in the fibre cross-sectional area takes place when the fibre is subjected to a lengthwise applied tensile stress and the fibre would become debonded and dislodged as soon as such a tensile stress is brought into action were friction the mechanism. On the fact that while the randomly oriented reinforcing filaments are kept from being pulled out from their embedded condition within the matrix and since they are the same time are able to undergo stretching therewithin, lies an essential feature of the invention. Because the present process provides for elastic behaviour of the reinforcing filaments to take place, while at the same time allowing that the elongation brought about thereon by the crack opening will not be taken up only be the filament extension spanning or bridging the crack width, but instead of that, the elongation stress is brought to bear throughout the filament length, it follows therefore that the tensile stress is kept thereby below the ultimate elongation of the reinforcing filaments; if the tensile stress were to be concentrated upon the filament section intersecting or spanning the crack, filament breaking would occur. On the contrary, the fibrillated reinforcing material according to the present invention makes it possible for the tensile stress to be transmitted between adjacent blocks of the fractured matrix through the entire filament stretchable sections while they are kept anchored within the cracked matrix, and this without being substantially affected by the matrix cracks. The adherence is not bonding to the matrix, it is interlocking of the fibrils of the monofilaments and the matrix.

In carrying out the process of the present invention in its preferred embodiments, the mortar components - comprised of hydraulic cement, water and inorganic fillers such as sand having a particle size distribution such that no particle is greater than 1/10 the average length of the reinforced fibrillated filaments to be formed in the mixing operation - are blended together in a mixer machine equipped with a high-speed propeller.

As stated hereinabove, the fibrous material fed into the mixing step is derived from polyolefin film which has been slit into ribbons of about 15mm wide; the ribbons while kept untwisted are fibrillated into fibrils by conventional mechanical means and then cut into sections of about 50mm long; and thereafter the fibrillated ribbon sections are spread out by air jet means.

As a consequence of the vigorous mechanical stirring carried out in the mixing operation, in combination with the shredding effect that takes place between the plastics fibres and the abrasive particles in the cement mortar, the fibrillating action goes on still further. As a result, besides breaking the plastics ribbon apart into separate monofilaments, secondary branched microfibrils or fibrets are brought forth as ramifications at points along the sides of the monofilament's length. The so formed ramifications or lateral "hooks" account for the high adhesion degree achieved between the fibrous reinforcing material and the cementation matrix. Furthermore, inasmuch as the energetic mechanical stirring helps to improve wetting of the surface of the materials making up the fibre-cement mortar, this in turn causes the mix to enhance its fluidity, improves cement hydration leading to a higher-density mortar, and the branched fibrils or hooks anchoring power is still improved further.

As a consequence of the plastics fibre's own resilience, its effective length in one direction is a function of its diameter. Also, the amount of fibrillation caused in the plastics ribbons to form separate monofilaments, as well as the mixing time and of course the degree of branching so effected, have an effect on the fibre effective length. Further, the fibre effective length and its diameter along with the amount of fibre are determining factors of the width and spacing of cracks to be developed in the fibre-cement hardened element once it undergoes its naturally occurring multiple cracking. This hardened element, however already cracked, continues still to effectively withstand tensile stresses.

Performance specifications to be met by a particular fibre-cement element once cracked, will determine the permissible breadth of cracks and spacing therebetween. In the process in accordance with the present invention these characteristics can be controlled since it provides for means to exercise influence over the process parameters related to diameter and length of fibre and of course its amount used.

Both economic considerations and because of its easy fibrillation, together with the inert chemical nature of polypropylene towards the cement paste, make polypropylene film the polyolefin preferred for the purpose of the process of the present invention. However, there are neither theoretical nor practical considerations ruling out the use of polyethylene alone instead of polypropylene, nor its admixtures therewith. Other plastics materials films such as acrylonitrile films, can also be used.

The physical properties of the fibre-cement elements reinforced as described above do not decay with time, and, on the contrary, they are increased such as it is the case with articles made from plain cement mortars; and the fibres embedded within the matrix remain unaffected by natural environmental heat and light.

The material obtained can either be shaped into sheets or it can also be moulded into several other forms. Moreover, because of its mechanical isotropic properties this is a multipurpose material that can in an economic manner be used for applications such as to replace asbestos-cement as well as for forming flexible coatings, and it is suitable also for varied specific applications where high loading and elastic behaviour are required characteristics.

For the purpose of illustrating the invention still further, there is set forth the following specific Example, which by no means is intended to be limitative.

EXAMPLE

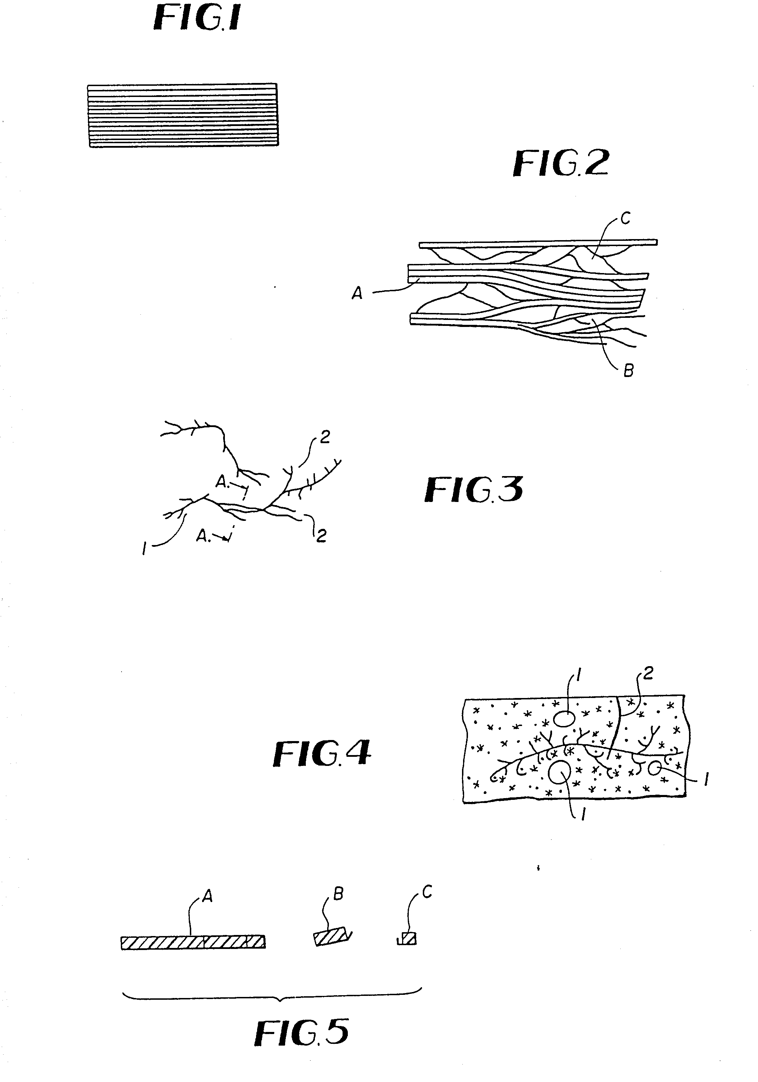

Sections of untwisted polypropylene fibrillated ribbon, having the general structure schematically shown in Figure 1, are prepared. The ribbon section is conventionally fibrillated along lengthwise extending slits. In this slit condition the ribbon has the following features:

| specific weight | 0.91 |
|---|---|
| denier | 6000 |
| width | 15 mm |
| thickness | 50 microns |
| length of section | 47 mm |

From the lack of affinity for water shown by polypropylene, it could normally be foreseen that the cement elements reinforced by means of such a material would have rather poor mechanical properties. Also, from their low specific weight the polypropylene fibres would be expected to come apart from the cementitious fluid medium or form separate phases therein, thus producing defective end products. These deficiencies suggested from the polyolefins' own nature are surmounted by means of the process of the invention, because the microfibrillated structure that is imparted in the process to the monofilaments, provides the fibrous reinforcing material with increased specific area to be wet by the cementitious medium which in turn makes it easy to form the homogeneous mixture.

12.5 kg of the so prepared fibrillated ribbon having the aforestated characteristics were subjected to a spreading out or opening step by means of an air stream. At the end of this opening step the ribbon pieces are seen as having the structure depicted in Figure 2. In that way a non-uniform degree of spreading out in the ribbon was attained.

There are shown in the same cut piece of ribbon two distinct zones: the A zone where despite the ribbon having been fibrillated lengthwise its fibres still remain connected together; the B zone, where the filaments are provided with a cross-sectional area ranging from about circular to nearly rectangular in shape, and they are comprised of some few fibrils; and the C zone where there are strips of about 1mm wide, which are generally rectangular in cross-sectional area and are slightly spaced apart but still connected each other through fibrils diagonally arranged therebetween. These strips will be additionally fibrillated in the next mixing step.

Then, the amount (12.5 kg) of slit but untwisted, spread-out ribbon is fed together with 500 kg Type 1 Portland cement, 300 litres of water and 100 kg of silica sand having a free moisture content below 5%, wherein the ribbon constitutes about 2% by weight of the dry materials, into a shear mixing machine, while the propeller is kept running. The charging operation is carried out little by little for a length of time of at least 6 minutes. The amount of polypropylene used represents 3.7% of the end volume of the hardened product.

The mixing compartment of the machine is chosen so as to be at least 20% greater than the volume of wet mixture. Said compartment is truncated-cone shaped and it is arranged with its smaller base downwardly directed.

All of the particles of the sand fed to the mixer passed through the U.S. Standard Series sieve No. 18 (screen opening, 1mm) and no more than 10% by weight of the particles passed through the U.S. Standard Series sieve No. 100 (mesh opening 0.149mm). The mixing time was 14 min. with the propeller running at 1200 rpm. In the mixer machine, the fibrillated ribbon undergoes a strong shredding action by the sand and cement particles whereby the ribbon is fully broken apart into separate monofilaments. These monofilaments are at the same time given the further fibrillated structure, by opening them up into a number of microfibrils or generally crimped fibrets varying in cross-sectional area and length. The micro-fibrillated filamentary structure thereby brought about in the monofilaments is schematically shown in Figure 3. This Figure 3 illustrates two microfibrillated filaments such as they finally appear as reinforcing means for the cement matrix. In zone 1 of Figure 3 there are shown microfibrils, and branches are illustrated in zone 2, these being the elements basically and strongly anchoring the monofilaments to the cement matrix. In Figure 4 a filament is illustrated within the matrix, with entrapped air bubbles being shown at 1, a matrix crack at 2, and a filament with its hook-like microfibrils is also shown. Figure 5 illustrates the filament cross-sectional area.

As hereinabove stated, the adherence of the reinforcing fibre with the reinforced cement matrix is other than a friction phenomenon, inasmuch as in polypropylene and the plastics fibres, under tensile stress the Poisson's ratio does not allow for contact to be maintained between the hardened matrix and the reinforcing fibre outer surface. Adherence is therefore the result of anchoring effect.

The specific weight of the fibre-cement as it finally sets is about 2.00. This is a relatively high figure, and it reflects the superior densification achieved for the material constituents, which increases the values of its mechanical properties.

The tensile strength of a plain matrix prepared from the same cement paste but without polypropylene fibres added, was of about 34 $kg/cm^2$; whereas the tensile strength of a comparable specimen of polypropylene-reinforced matrix prepared according to the procedure of the present Example, benefits from the tensile strength of the fibrillated polypropylene filament which is of about 3500 kg/cm$^2$ at its limit of proportionality; modulus of rupture for tensile strength is of about 4000 kg/cm$^2$.

The distribution of fibres within the matrix, along with the means through which their anchorage to the matrix is achieved, make it sure for the fibre-cement element to resist tension forces after the hardened matrix has become cracked, and that property is equally shown by the element at any directions to its body. The general condition for all of the the physical properties of the fibre-cement material prepared according to the present invention lies in its isotropy which is accomplished as a result from the process of its manufacture.

In its fresh condition, the mortar prepared in accordance with the present invention can easily be moulded. Its moulding may be carried out by means of extrusion, injection moulding, casting, centrifugal moulding or by means of a combination of the above moulding methods. Parts of that material while in their fresh condition are easily joined to each other as a result of the intercrossing of filaments of the different masses to be joined together.

The features disclosed in the foregoing description, in the following claims and/or in the accompanying drawings may, both separately and in any combination thereof, be material for realising the invention in diverse forms thereof.

CLAIMS

1.     A cement mortar comprising water, particulate mortar components of .cement and sand, and separate reinforcing filaments, characterised in that said separate reinforcing filaments are obtained from polyolefin film and have filamentary structure comprising hooked microfibrils laterally branching from points along the length of said separate filaments, and are evenly distributed throughout the body of said cement mortar in a randomly oriented fashion along all of its spatial directions, said microfibrillated filaments consisting in sections shredded from non-twisted fibrillated ribbons having a length of up to 50mm long, with said fibrillated ribbons having been split apart from said polyolefin film and subjected to microfibrillation by stirring particulate mortar components and said reinforcing filaments to effect stretching the fibrillated film fibrils to breakage so generating smaller splinters which are the microfibrils.

2.     A cement mortar characterised by microfibrillated reinforcing filaments obtained from a polyolefin film, wherein said filaments are separate sections of fibre having a length of up to about 50mm, said separate filament sections being provided with curled microfibrils laterally branching out along the length thereof; and wherein said separate filaments are homogeneously dispersed throughout said cement mortar in randomly directed orientations in all of its spatial directions using high speed stirring, and where the filamentary reinforcing material is comprised in an amount between 0.2% and 15% by volume of the total dry volume of non-reinforced mortar.

3.     Cement mortar as claimed in claim 1 or 2, wherein said polyolefin is selected from polypropylene, polyethylene and mixtures thereof.

4.     An isotropic element manufactured from a cement mortar characterised by about 0.2% - 15% by volume of microfibrillated fibrous reinforcing material over total dry volume comprised of separate filaments evenly distributed throughout the matrix of said element, wherein said filaments are randomly dispersed in all of the spatial directions of said element, with said filaments being separate sections of about 50mm long cut from fibrillated polyolefin film and subjected to a microfibrillation operation, and said separate filament being provided with laterally extending curled or hooked microfibrils branching from points spaced along the length thereof, whereby said element shows substantially equal mechanical properties when measured in any directions of the body thereof.

5. A cement mortar-based element as claimed in claim 4, wherein said fibrous reinforcing material is selected from polypropylene, polyethylene and mixtures thereof.

6. A process for manufacturing a cement mortar-based, plastics fibre-reinforced element showing mechanical properties which are independent of the direction of its body in which the properties are measured, which method is characterised by embodying into the cement mortar from about 0.20% by volume to about 15% by volume of fibrous reinforcing plastics material comprised of a fibrillated polyofefin; stirring the mortar-fibrous mix to form thereby separate filaments of about 50mm long homogeneously dispersed throughout said mix while at the same time said separate filaments are given a microfibrillated structure having laterally extended curled or hooked microfibrils branching from points spaced along the length thereof; and moulding said mortar-fibrous material mix into any element shape with said reinforcing microfibrillated structures being randomly oriented throughout the hardened matrix.

7. A method for manufacturing isotropic elements according to claim 6, wherein said fibrous reinforcing plastics material is polypropylene.

8. A process for producing cement mortar-based elements having mechanical properties substantially equal in all of the directions of their bodies, which process is characterised by preparing ron-twisted, fibrillated ribbons from a polyolefin film material and cutting the fibrillated ribbons into sections of up to about 50mm long; spreading out said fibrillated cut ribbons by air treating the same; feeding said sections of opened-up fibrillated cut ribbon sections into a mixing device provided with high-speed rotary stirring means while at the same time cement, fine aggregate and water are being fed into said mixing device, and stirring the mix for a time enough to bring about by means of the shredding action between said mix particulate materials and said ribbons separate microfibrillated filaments having micro- fibrillated structure provided with curled or hooked microfibrils branching therealong, with said microfibrillated filaments being homogeneously distributed throughout the mass of said cement mortar mix, and in orientations randomly directed along all of its spatial directions; and moulding said cement mortar containing said microfibrillated filaments, into the shape of said elements.

9. A process according to claim 8, wherein said polyolefin film is selected from polypropylene, polyethylene, and mixtures thereof.

10. A cement mortar in accordance with any one of claims 1, 2 or 4, wherein said reinforcing filaments are present in an amount between about 2.5% and 3.5% by volume based on the total dry volume of non-reinforced mortar.

11. A cement mortar according to claim 10, containing inorganic filler having a particle size distribution such that substantially no particle of inorganic filler is greater than 1/10 the average length of said reinforcing filaments.

12. A process according to claim 6 or 8, wherein said mixing is effected with a propeller running at a speed of at least approximately 1,200 rpm for several minutes.

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 407 676 (J.M. RESTREPO) <br> * Claims 1,3,4,11,13; column 6, lines 46-54; column 8, lines 45-46 * | 1-12 | C 04 B 16/06 <br> C 04 B 32/02 |
| X | GB-A-1 130 612 (SHELL) <br> * Page 1, line 76 - page 2, line 39; page 3, lines 8-29, 34-41, 88-91 * | 1-10 | |
| A | GB-A-1 399 424 (NEDUCO) <br> * Page 3, lines 18-61 * | 1 | |

| | | | TECHNICAL FIELDS SEARCHED (Int. Cl.4) |
|---|---|---|---|
| | | | C 04 B 16/00 <br> C 04 B 32/00 |

*The present search report has been drawn up for all claims*

| Place of search | Date of completion of the search | Examiner |
|---|---|---|
| THE HAGUE | 04-07-1984 | DAELEMAN P.C.A. |